# EUROPEAN PATENT SPECIFICATION

(11) **EP 3 409 000 B1**
(45) Date of publication and mention of the grant of the patent: **10.03.2021**
(21) Application number: 16701759.9
(22) Date of filing: 26.01.2016
(51) Int. Cl.: H04L 29/12

(54) **METHODS AND APPARATUS FOR CONFIGURING AN M2M DEVICE**
VERFAHREN UND VORRICHTUNG ZUR KONFIGURATION EINES M2M GERÄTS
PROCÉDÉ ET DISPOSTIF POUR CONFIGURER UN DISPOSITIF M2M

(43) Date of publication of application: 05.12.2018
(73) Proprietor: Telefonaktiebolaget LM Ericsson (PUBL), 164 83 Stockholm (SE)
(72) Inventor: JIMÉNEZ, Jaime, 02420 Jorvas (FI); MELÉN, Jan, 02420 Jorvas (FI); KERÄNEN, Ari, 02420 Jorvas (FI)
(74) Representative: Ericsson
(86) International application number: PCT/EP2016/051591
(87) International publication number: WO 2017/063759

(56) References cited:
- US-A1- 2007 133 567
- TROAN R DROMS CISCO SYSTEMS O: "IPv6 Prefix Options for Dynamic Host Configuration Protocol (DHCP) version 6; rfc3633.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 December 2003 (2003-12-01), XP015009415, ISSN: 0000-0003 cited in the application
- HUTH J FREIMANN IBM GERMANY R&D GMBH V ZIMMER INTEL D THALER MICROSOFT T: "DHCPv6 Options for Network Boot; rfc5970.txt", DHCPV6 OPTIONS FOR NETWORK BOOT; RFC5970.TXT, INTERNET ENGINEERING TASK FORCE, IETF; STANDARD, INTERNET SOCIETY (ISOC) 4, RUE DES FALAISES CH- 1205 GENEVA, SWITZERLAND, 14 September 2010 (2010-09-14), pages 1-11, XP015073004,
- KIM SEONG-MIN ET AL: "IoT home gateway for auto-configuration and management of MQTT devices", 2015 IEEE CONFERENCE ON WIRELESS SENSORS (ICWISE), IEEE, 24 August 2015 (2015-08-24), pages 12-17, XP032848012, DOI: 10.1109/ICWISE.2015.7380346

## Description

### TECHNICAL FIELD

The present invention relates to methods for configuring a machine-to-machine (M2M) device. The present invention also relates to a server and an M2M device, and to a computer program configured to carry out methods for configuring an M2M device.

### BACKGROUND

The internet of things (loT) is a network of physical smart objects such as sensors that exchange information with other sensors, devices or servers, without human interaction. As such, these devices are sometimes referred to as machine-to-machine (M2M) devices. Some examples of services in loT include built-in sensors in automobiles or homes, heart monitoring implants or smart thermostats systems. Many new protocols have been developed after the introduction of Internet of Things (loT) including Lightweight Machine to Machine protocol (LWM2M) and constrained application protocol (CoAP), both of which are light and compact application protocols.

M2M devices may communicate with other M2M devices and systems using wireless or wired technology. Regarding wireless technologies, M2M devices may support short range communication technologies such as Bluetooth, Wi-Fi and Zigbee. They may also support long range technologies such as radio communication, however this is more power consuming than short range communication.

There is a desire to improve the configurability of M2M devices so that they can more easily be adapted to changes in a network, for example if the M2M device is communicating with a malfunctioning or misbehaving server, or if there is a change in ownership RFC 3633 discloses IPv6 prefix options for DHCPv6.

RFC 5970 discloses DHCP options for network boot.

### SUMMARY

When an M2M device is first switched on it contacts a server for a bootstrapping service. The bootstrapping service loads and then executes other programs in the M2M device or it redirects the M2M device to another server which configures the M2M device to carry out the desired function. Information on how to connect to the bootstrapping service is typically configured in the M2M device at manufacturing stage. This information is typically a bootstrapping service address for contacting a server running the bootstrapping service. A problem arises when an alternative location for the bootstrapping service is required, for example, the server running the bootstrapping service may be malfunctioning or misbehaving, or perhaps the M2M device has changed owner and is to connect to a different network. In order to change the bootstrapping service the M2M device needs to be updated with a new bootstrapping service address. This can be cumbersome and/or time consuming for an M2M device user. Furthermore, M2M devices typically lack a user interface and so reconfiguring the bootstrapping service address may be difficult.

Therefore, it is an aim of the present invention, defined in the appended claims, is to at least partially address one or more of the challenges discussed above.

According to an aspect of the invention, there is provided a gateway for configuring a device management bootstrapping service address in a machine-to-machine, M2M, device, the gateway being configured to;
send a request to a dynamic host configuration protocol for internet protocol version six, DHCPv6, server for identity association for prefix delegation, IA_PD, and
receive a response from the DHCPv6 server comprising at least one prefix of an Internet Protocol for version 6, IPv6, address assigned to the gateway, and the gateway being further configured to receive from a node, a device management bootstrapping service address, wherein the node is the DHCPv6 server, and the gateway is configured to receive the device management bootstrapping service address from the DHCPv6 server in response to its request for IA_PD, wherein the gateway is further configured to send to the M2M device an IPv6 address, based on the prefix, together with the device management bootstrapping service address, and wherein the gateway is configured to receive a request from an M2M device for an IPv6 address, to configure an IPv6 address based on the prefix received from the DHCPv6 server and assign said IPv6 address to the M2M device, and then send it to the M2M device together with the device management bootstrapping service address.

In one embodiment, the gateway is further configured to send the IPv6 address assigned to the M2M device to a server to which the device management bootstrapping service address leads.

In another embodiment, the gateway may be configured with a list of IP addresses of M2M devices to which it has sent the device management bootstrapping service address, and upon receiving a request for this list from a server of the device management bootstrapping service address, the gateway is configured to send said list to said server.

The gateway may be configured with a light weight machine to machine, LWM2M, protocol object comprising the list of IP address of M2M devices to which it has sent the device management bootstrapping service address.

In one embodiment, the gateway is configured to send the device management bootstrapping service address together with a server certificate to the M2M device.

In another embodiment, the request received from the M2M device and the response sent to the M2M device may be according to the DHCPv6 protocol.

In another embodiment, the request for IA_PD sent to the DHCPv6 server and the response received from the DHCPv6 server may be according to the DHCPv6 protocol.

The gateway may be a capillary gateway of a capillary network comprising M2M devices.

According to another aspect of the invention, there is provided a machine-to-machine, M2M, device suitable for being configured with a device management bootstrapping service address, the M2M device being configured to send a request for an Internet Protocol version six, IPv6, address to a gateway and receive a response from the gateway. The response comprises an IPv6 address assigned to the M2M device and a device management bootstrapping service address together with a server certificate, and based on the server certificate, verify a bootstrapping server to which the device management bootstrapping service address leads.

In one embodiment, the request comprises a dynamic host configuration protocol for Internet protocol version six, DHCPv6, request message.

In another embodiment, the M2M device belongs to a capillary network and is configured to send the request for an IPv6 address to a capillary gateway.

In yet another embodiment, the M2M device comprises a light weight machine to machine protocol, LWM2M, client.

According to a further aspect of the invention, there is provided a Dynamic Host Configuration Protocol for Internet Protocol Version Six, DHCPv6, Server configured to:receive a request for Identity Association Prefix Delegation, IA_PD, from a gateway; and in response to the request, send to the gateway at least one prefix of an Internet Protocol for version 6, IPv6, address assigned to the gateway together with a device management bootstrapping service address so that a Machine to Machine, M2M device can be configured with said management bootstrapping service address.

According to yet another aspect of the invention, there is provided a system for configuring a machine-to-machine, M2M, device, the system comprising;
a gateway configured to send a request to a dynamic host configuration protocol for internet protocol version six, DHCPv6, server for identity association for prefix delegation, IA_PD, and
the gateway further being configured to receive a response from the DHCPv6 server comprising at least one prefix of an Internet Protocol for version 6, IPv6, address assigned to the gateway,
the gateway further being configured to receive from a node, a device management bootstrapping service address, and
an M2M device configured to request an IPv6 address and receiving the IPv6 address from the gateway, based on the prefix, together with the device management bootstrapping service address, wherein the node is the DHCPv6 server, and the gateway is configured to receive the device management bootstrapping service address from the DHCPv6 server in response to its request for IA_PD.

According to another aspect of the invention, there is provided a method performed by a gateway for configuring a device management bootstrapping service address in a machine-to-machine, M2M, device, the method comprising;
receiving a request from the M2M device for an Internet Protocol for version 6, IPv6, address, to configure an IPv6 address based on a prefix received from a DHCPv6 server and assign said IPv6 address to the M2M device,
sending a request to the dynamic host configuration protocol for internet protocol version six, DHCPv6, server for identity association for prefix delegation, IA_PD,
receiving a response from the DHCPv6 server comprising at least one prefix of an IPv6 address assigned to the gateway, and
receiving from a node, a device management bootstrapping service address, wherein the node is the DHCPv6 server, and the gateway receives the device management bootstrapping service address from the DHCPv6 server in response to its request for IA_PD, and further sending to the M2M device the IPv6 address, based on the prefix, together with the device management bootstrapping service address.

According to yet another aspect of the invention, there is provided a method performed by a machine-to-machine, M2M, device suitable for being configured with a device management bootstrapping service address, the method comprising sending a request for an Internet Protocol version six, IPv6, address to a gateway, receiving a response from the gateway, the response comprising an IPv6 address assigned to the M2M device and an address for the device management bootstrapping service together with a server certificate, and based on the server certificate, verifying a bootstrapping server to which the device management bootstrapping service address leads.

According to a further aspect of the invention, there is provided a method performed by Dynamic Host Configuration Protocol for Internet Protocol Version Six, DHCPv6, Server, the method comprising:
the DHCPv6 server receiving a request for Identity Association Prefix Delegation, IA_PD, from a gateway;
in response to the request, sending to the gateway at least one prefix of an Internet Protocol for version 6, IPv6, address assigned to the gateway together with a device management bootstrapping service address so that a Machine to Machine, M2M device can be configured with said management bootstrapping service address.

The device management bootstrapping service address, is an address of a server providing a bootstrapping function. The address may be in the format of a uniform resource identifier URI) or another suitable format.

### BRIEF DESCRIPTION OF THE DRAWINGS

For a better understanding of the present invention, and to show more clearly how it may be carried into effect, reference will now be made, by way of example, to the following drawings in which:
Figure 1 is a schematic illustration of an embodiment of the invention;
Figure 2 shows a message flow illustrating an embodiment of the invention;
Figure 3 shows another message flow illustrating an embodiment of the invention;
Figure 4 is a schematic illustration of another embodiment of the invention;
Figure 5 is a schematic illustration of LWM2M architecture;
Figure 6 shows a message flow illustrating an embodiment of the invention;
Figure 7 shows another message flow illustrating an embodiment of the invention;
Figure 7a is a schematic illustration of an object of the LWM2M protocol illustrating an embodiment of the invention;
Figure 8 is a flow chart of a method performed by a gateway;
Figure 9 is a flow chart of a method performed by an M2M device;
Figure 10 is a flow chart of a method performed by a DHCPv6 server;
Figure 11 is a flow chart of a method performed by a bootstrapping server;
Figure 12 is a box diagram illustrating a gateway;
Figure 13 is a box diagram illustrating an M2M device
Figure 14 is a box diagram illustrating a DHCPv6 server;
Figure 15 is a box diagram illustrating a bootstrapping server;
Figure 16 is a box diagram illustrating functional units of a gateway;
Figure 17 is a box diagram illustrating functional units of an M2M device;
Figure 18 is a box diagram illustrating functional units of DHCPv6 server; and
Figure 19 is a box diagram illustrating functional units of a bootstrapping server.

### DETAILED DESCRIPTION

Aspects of the present invention are defined as in the appended claims. The invention employs the dynamic host configuration protocol for internet protocol version 6 (DHVPv6) to send the device management bootstrapping service address to the M2M device.

The term M2M device used herein should be understood to be any device which is configured or configurable to communicate with another device, server or system without human interaction. The M2M device may for example be a sensor for light, pressure, temperature, vibration or actuators. The M2M device may form part of an apparatus such as a vehicle, an appliance (including a fridge, freezer or central heating), or a user equipment (such as a mobile phone, laptop, smart phone, wireless communication device).

As mentioned above, aspects of the invention make use of DHVPv6 in order to configure a device management bootstrapping service address in the M2M device. DHCPv6 is an internet application protocol that uses a client/server model to communicate between hosts. DHCPv6 executes over the UDP transport protocol. It provides a mechanism to autoconfigure inter-link Host IPv6 addresses, provides parameters to auto-register and receives Domain Name System Host names and provides a mechanism to specify additional configuration options in the protocol.

An extension of DHCPv6 is DHCPv6 Prefix Delegation (DHCPv6 PD) as specified in

RFC33633 of the Internet Engineering Task Force (IETF). DHCPv6 PD is aimed at assigning complete subnets and other network and interface parameters from a DHCPv6 server to a DHCPv6 PD client. This means that instead of a single address assignment, DHCPv6 PD will assign a set of IPv6 subnets, or a prefix of Internet Protocol version 6 (IPv6) addresses, for example 2001 :db8::/60. This means that the client who has received the IPv6 subnets, or IPv6 address prefix, can assign IPv6 addresses dynamically to its IPv6 enabled interfaces.

The invention of the present invention makes use of another extension of the DHCPv6 which is referred to as Identity Association for Prefix Delegation (IA_PD) and is specified in RFC3633 of IETF. IA_PD is similar to PD in that prefixes are assigned to a client. IA_PD is a collection of prefixes assigned to a requesting client. Each IA_PD has an associated Identity Association Identifier (IAID). A requesting client may have more than one IA_PD assigned to it; for example, one for each of its interfaces. An IA_PD is a construct through which a delegating server and a requesting client can identify, group and manage a set of related IPv6 prefixes. Each IA_PD consists of an IAID and associated configuration information. An IA_PD for prefixes is the equivalent of an Identity Association (IA) for addresses as described in RFC 3315 of IETF.

An IA_PD is different from an IA, in that it does not need to be associated with exactly one interface. One IA_PD can be associated with the requesting router, with a set of interfaces or with exactly one interface. A requesting client must create at least one distinct IA_PD. It may associate a distinct IA_PD with each of its downstream network interfaces and use that IA_PD to obtain a prefix for that interface from the delegating server.

In aspects of this invention, a client receiving a prefix of IPv6 addresses as described above can be considered to be a gateway. The gateway configures and assigns an IPv6 address to IPv6 enabled M2M devices which form part of its local network. The gateway also receives a device management bootstrapping service address together with the prefix of IPv6 address and forwards the device management bootstrapping service address to the M2M devices.

When the M2M has received the device management bootstrapping service address it can configure or save the address and then use the address to locate a bootstrapping server which runs the device management bootstrapping service.

This enables M2M devices to be more configurable, in particular, it enables the address for the device management bootstrapping service or function to be configured after the M2M device has been manufactured.

The term device management bootstrapping service or function used herein is a service run by a bootstrapping server and is for bootstrapping the M2M device by redirecting it to another server which configures or manages the M2M device to carry out a desired function, e.g. take a temperature reading or reconfigure when to take a temperature reading. Device Management Bootstrapping service address used herein is an address to the bootstrapping server which runs the device management bootstrapping service. The address may be a Uniform Resource Identifier (URI) or any other appropriate address. When the invention is implemented as part of lightweight management machine-to-machine protocol (LWM2M) as described below, the URI uniquely identifies the bootstrapping server or LWM2M bootstrap server, and is in the form "coaps://host:port", where host is an IP address or FQDN, and port is the UDP port of the server..

The term "gateway" used herein is a network point or node that acts as an entrance to another network. It controls traffic to and from the network which it acts as a gateway for. A gateway may be considered to have the functions of a router in that it knows where to direct a given packet of data, and a switch, which furnishes the actual path in and out of the gateway for a given packet.

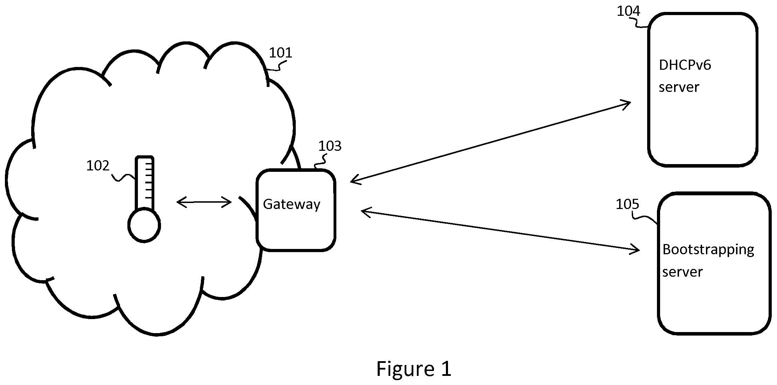

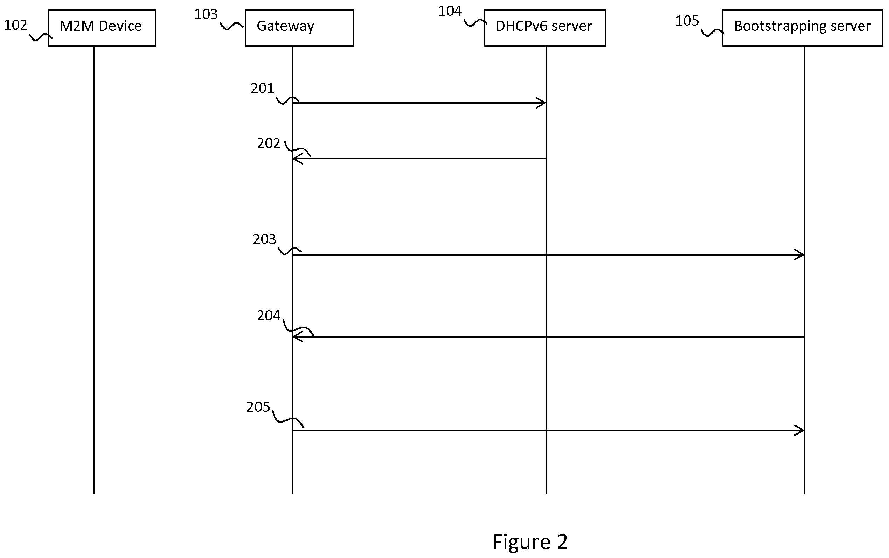

An aspect of the invention will now be described with reference to figure 1. A gateway 103 and an M2M device 102 form part of a local network 101. The gateway 103 is configured to communicate with a DHCPv6 server 104 and a bootstrapping server 105. Before the gateway 103 delegates an IPv6 address to the M2M device, it must first receive a prefix of IPv6 addresses from the DHCPv6 server 104, and so the message flow between the gateway 103, the DHCPv6 server 104 and the bootstrapping server 105 will now be described with reference to figure 2.

At step 201, the gateway 103 sends a DHCPv6 request to the DHCPv6 server 104 requesting Identity Association for Prefix Delegation (AI_PD). The DHCPv6 104 assigns at least one prefix of an IPv6 address to the gateway 103 or its local network 101 and sends the at least one prefix to the gateway 103, step 202. In addition to the at least one prefix and as part of the AI_PD, options are included in the reply to the gateway 103. These options are a device management bootstrapping service address and a server certificate which certifies the bootstrapping server running the device managing bootstrapping service.

When the gateway 103 has received the at least one prefix of an IPv6 address and the device management bootstrapping service address, and optionally the server certificate, the gateway 103 proceeds to register itself with the bootstrapping server 105, step 203. This is so that the bootstrapping server 105 can at a later stage observe which M2M devices that have been configured with the device management bootstrapping service address. Upon receiving the registration request from the gateway 103, the bootstrapping server 105 configures itself to observe the gateway 103 and then sends a confirmation message to said gateway 103, step 204. When the bootstrapping server 105 wants information on which M2M devices that have received the device management bootstrapping service address, the bootstrapping server 105 sends a GET request to the gateway 103 for information on the M2M device that have been configured with the device management bootstrapping server address, step 205. The information may be IPv6 addresses of the M2M devices, time of receiving the device management bootstrapping service address or device unique identifiers (DUID) or any other relevant information. Although not shown in the figure 2, the gateway responds with a list of said M2M devices and requested information.

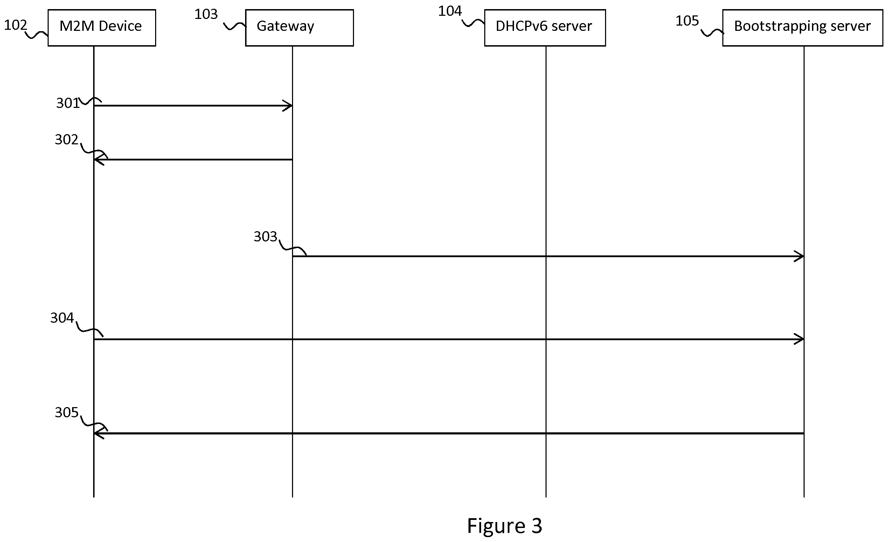

Furthermore, the gateway 103 is not limited to registering itself with the bootstrapping server 105 such that the bootstrapping server 105 can later observe the M2M devices configured with the device management bootstrapping service address. For example, in an alternative embodiment the gateway 103 can send information such as a list of IPv6 addresses of said M2M devices without being prompted by the bootstrapping server 105 (see figure 3), or it can send information of M2M device as soon as it has been configured with the device management bootstrapping service address. The gateway can send information of the M2M devices to the bootstrapping server by performing a PUT operation in accordance with HTTP protocol.

It will now be described how an M2M device is configured with the device management bootstrapping service address. When an M2M device 102 is first switched on it sends out a multicast message to inform any listening nodes that it has been switched on. The M2M device 102 uses an IPv6 link-local multicast address which all gateways having DHCPv6 functionality listen in to. Thus, the M2M device 102 is not configured with a specific address for a gateway. The gateway 103 in figure 1 hears the multicast message and the gateway 103 and the M2M device 102 exchange messages such that the M2M device attaches to the local network 101 of the gateway 103. In the next step, step 301, the M2M device 102 sends a DHCPv6 request to the gateway 103. The request is for an IPv6 address, however in an alternative embodiment the request is for an IPv6 address and a device management bootstrapping service address. The gateway 103 configures an IPv6 address based on the at least one prefix it received from the DHCPv6 server in step 202 in figure 2 and assigns it to the M2M device 102. In the next step, step 302, the gateway 103 sends a DHCPv6 response to the M2M device 102, the response comprising the IPv6 address assigned to the M2M device 102 and the device management bootstrapping service address the gateway 103 received from the DHCPv6 server in step 202 in figure 2. The M2M device 102 now has the device managing bootstrapping service address and so it can proceed to send a message to the bootstrapping server 105 to which the address leads, so that it can proceed with the bootstrapping service. Optionally in step 302, the gateway 103 may also send the server certificate it received in step 202 in figure 2. As mentioned above, the M2M device 102 verifies the bootstrapping server 105 based on the server certificate.

In step 303 in figure 3, the gateway 103 sends a message to the bootstrapping server 105. The message comprises a list of M2M devices and their relevant information (IPv6 address, DUID or timestamps) to which the gateway 103 has sent the device management bootstrapping service address. This enables the bootstrapping server 105 to keep track of the M2M devices which will contact the bootstrapping server 105 requesting its bootstrapping service. The message in step 303 may alternatively comprise information a single M2M device such that the gateway sends such a message as soon as it has sent the message in step 302, i.e. on an ad hoc basis.

The M2M device can now contact the bootstrapping server 105 as set out in step 304 so as to initiate the bootstrapping procedure, step 305.

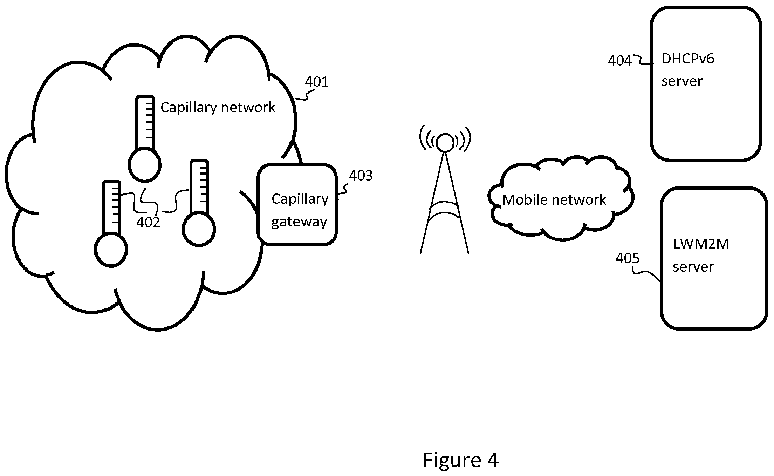

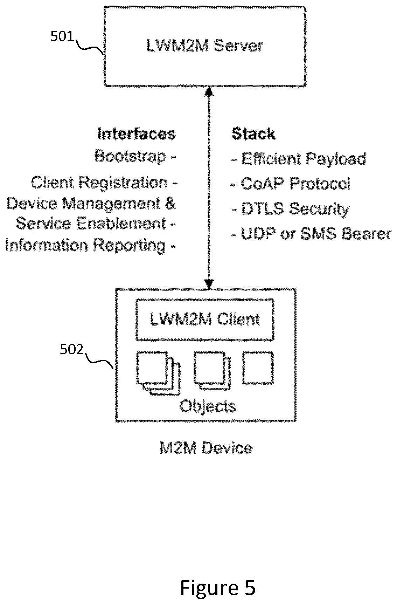

Another embodiment will now be described with reference to figures 4 and 5. In this example, M2M devices 402 form part of a capillary network 401. A capillary network is a local network relying on short-range radio technology for efficient communication between devices themselves. The M2M devices 402 can also communicate with external networks via a capillary gateway 403. For example, the capillary gateway 403 may connect the capillary network 401 with a cellular network which in turn is connected to the global communication infrastructure. The capillary gateway 403 is also referred to as a gateway herein.

This embodiment makes use of a protocol developed by Open Mobile Alliance (OMA), namely Lightweight Machine to Machine (LWM2M). The LWM2M architecture is shown in figure 5 and it comprises two components; a LWM2M server 501 and LWM2M client 502. The LWM2M server corresponds to the LWM2M server 405 shown in figures 4, 5, 6 and 7. The LWM2M client 502 forms part of an M2M device such as the M2M device(s) 402 shown in figures 4, 5, 6, and 7. The LWM2M sever 501 may have an interface for bootstrapping and/or device management, in other words the LWM2M server may be a LWM2M bootstrapping server or a LWM2M (device) management server, however both are configured to run the bootstrapping service for an M2M device as discussed above and so the LWM2M server should be understood as also falling within the term "bootstrapping server".

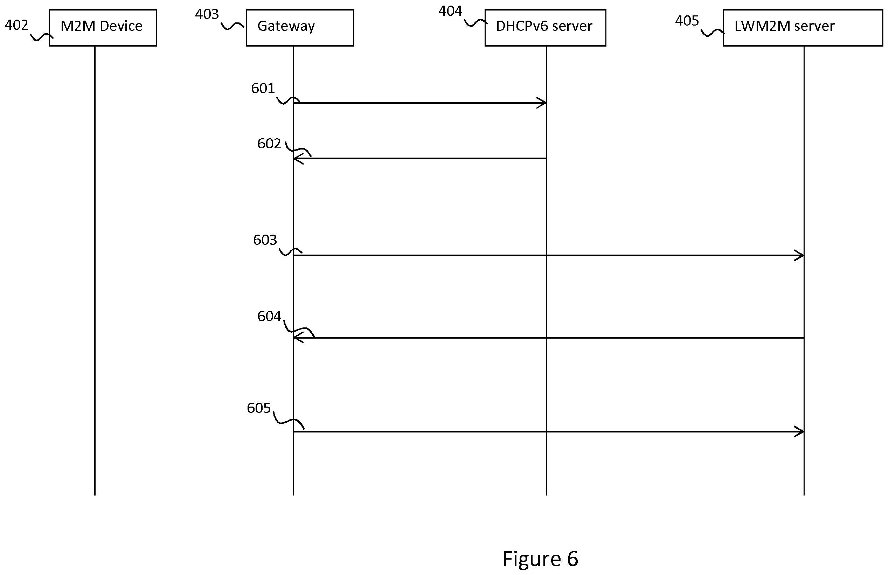

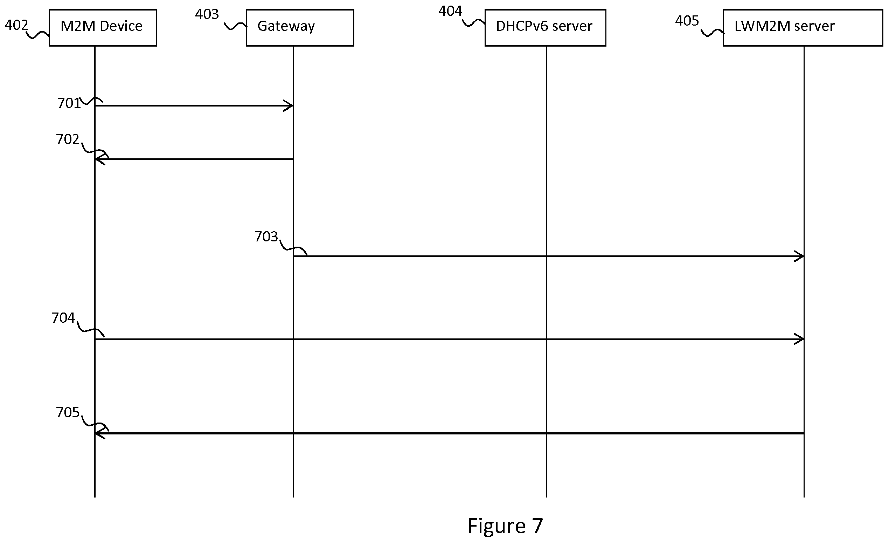

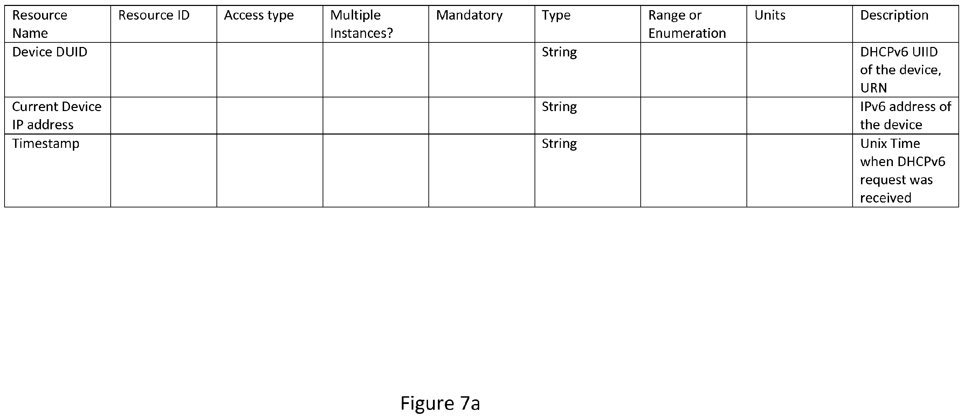

This embodiment is similar to the embodiments and its alternatives described with reference to figures 1 to 3, however for the sake of clarity, the message exchange flow between the M2M device 402, gateway 403, DHCPv6 server 404 and LWM2M server 405 will now be described with reference to figures 6 and 7.

At step 601, the gateway 403 sends a DHCPv6 request to the DHCPv6 server 404 requesting Identity Association for Prefix Delegation (AI_PD). The DHCPv6 404 assigns at least one prefix of an IPv6 address to the gateway 403 or the capillary network 401 and sends the at least one prefix to the gateway 403 in step 602. In addition to the at least one prefix, the DHCPv6 server 404 may also send in step 602"options" to the gateway as part of IA_PD. One such option is a device management bootstrapping service address which may be called LWM2M_BOOTSTRAPPING_URI. The DHCPv6 server 404 may also send a LWM2M server certificate as an option in step 602. This option may be called LWM2M_SERVER_CERT. The LWM2M certificate can be used by the M2M device 402 to verify the LWM2M server 405 running the device management bootstrapping service.

When the gateway 403 has received the at least one prefix of an IPv6 address and the device management bootstrapping service address, and optionally the LWM2M server certificate, the gateway 403 proceeds to register itself with the LWM2M server 405, step 603. This is so that the LWM2M server 403 can at a later stage observe which M2M devices that have been configured with the device management bootstrapping service address. The LWM2M server then configures itself to observe gateway 403, and then send a confirmation message to the gateway 403, step 603. When the LWM2M server 405 wants to find out which M2M devices that have received the device management bootstrapping service address, the LWM2M server 405 sends a GET request to the gateway 403 for information on the M2M device that have been configured with the device management bootstrapping server address, step 605. The information may be IPv6 addresses of the M2M devices, timestamp of receiving the device management bootstrapping service address or device unique identifiers (DUID) or any other relevant information. Although not shown in the figure 6, the gateway responds with a list of said M2M devices and requested information.

Some alternative configurations will now be described. For example, the gateway 403 is not limited to receive the device management bootstrapping service address from the DHCPv6 server 404. The gateway 403 can receive it from another source, for example another server. In one embodiment, the gateway 403 receives the device management bootstrapping service address during a router advertisement (RA) step. This may be a type 134 message as part of neighbour discovery protocol as described in RFC 4861 of IETF. Alternatively, the device management bootstrapping service address can be distributed to the gateway 403 using HomeNet protocol as specified in RFC7368 of IETF.

Furthermore, the gateway 403 is not limited to registering itself with the LWM2M server 405 such that the LWM2M server 405 can later observe the M2M devices configured with the device management bootstrapping service address. For example, in an alternative embodiment the gateway 403 can send information of said M2M devices without being promoted by the LWM2M server 405, or it can send information of an M2M device as soon as it has been configured with the device management bootstrapping service address. This ad hoc process of providing information to the bootstrapping server 405 may be implemented by using the gateway 403 performing a PUT operation in accordance with the HTTP protocol.

Furthermore, in the example where the LWM2M server 405 is configured to observe M2M devices configured with the device management bootstrapping service address, it may request a registered-client object from the gateway as shown in figure 7a. This object is an example and the embodiments using the LWM2M protocol are not limited to this particular object.

It will now be described how an M2M device is configured with the device management bootstrapping service address. When an M2M device 402 is first switched on it sends out a multicast message to inform any listening nodes that it has been switched on. The M2M device 402 uses an IPv6 link-local multicast address which all gateways having DHCPv6 functionality listen in to. Thus, the M2M device 402 is not configured with a specific address for a gateway. The gateway 403 in figure 4 hears the multicast message and the gateway 403 and the M2M device 402 exchange messages such that the M2M device attaches to the capillary network 401 of the gateway 403. In the next step, as shown in figure 7 step 701, the M2M device 702 sends a DHCPv6 request to the gateway 403. The request is for an IPv6 address. In an alternative embodiment, the M2M device 702 request is for an IPv6 address and a device management bootstrapping service address. The gateway 403 configures an IPv6 address based on the at least one prefix it received from the DHCPv6 server in step 602 in figure 6 and assigns it to the M2M device 402. In the next step, step 702, the gateway 403 sends a DHCPv6 response to the M2M device 402, the response comprising the IPv6 address assigned to the M2M device 402 and the device management bootstrapping service address the gateway 403 received from the DHCPv6 server in step 602 in figure 6. The M2M device 402 now has the device management bootstrapping service address and so it can proceed to send a message to the LWM2M server 405 to which the address leads, so that it can proceed with the bootstrapping service. Optionally in step 702, the gateway 403 may also send the LWM2M server certificate it received in step 602 in figure 6.

In step 703 in figure 7, the gateway 403 sends a message to the LWM2M server 405. The message comprises a list of information of M2M devices to which the gateway 403 has sent the device management bootstrapping service address. (The information may be IPv6 address, DUID or timestamp of M2M devices.)This enables the LWM2M server 105 to keep track of the M2M devices which will contact the LWM2M server 405 requiring its bootstrapping service. The message in step 703 may alternatively comprise information of a single M2M device such that the gateway sends such a message as soon as it has sent the message in step 702, i.e. it is sent on an ad hoc basis. The gateway 403 may perform a PUT operation in order to send a list of information or information of a single M2M device to a LWM2M server without first receiving a request for such information from the LWM2M server.

The M2M device 402 can now contact the LWM2M server 405, step 704. The LWM2M responds to the M2M device 402 so as to initiate bootstrapping procedure.

The embodiments described herein provide the advantage of that the device management bootstrapping service address in M2M devices can be configured and reconfigured at any time. Thus, M2M devices do not have to be programmed with such an address during manufacturing stage. Furthermore, as the address can easily be changed the M2M devices are more configurable and problems with malfunctioning or malicious networks and bootstrapping servers can more easily be overcome, for example by changing the device management bootstrapping service address in M2M devices.

An embodiment of a gateway for configuring a device management bootstrapping service address in an M2M device will now be described. The gateway may be gateway 103 or 403 as described above. The gateway is configured to send a request to a dynamic host configuration protocol for internet protocol version six, DHCPv6, server for identity association for prefix delegation, IA_PD, and receive a response from the DHCPv6 server comprising at least one prefix of an Internet Protocol for version 6, IPv6, address assigned to the gateway. The gateway is further configured to receive a device management bootstrapping service address from a node. This node is the DHCPv6 server, such that the gateway is configured to receive the device management bootstrapping service address from the DHCPv6 server in response to its request for IA_PD.

The gateway is further configured to send to an M2M device an IPv6 address, based on the prefix, together with the device management bootstrapping service address. This is implemented by the gateway being configured to receive a request from an M2M device for an IPv6 address, to configure an IPv6 address based on the prefix received from the DHCPv6 server and assign said IPv6 address to the M2M device, and then send it to the M2M device together with the device management bootstrapping service address.

The gateway may be further configured to send the IPv6 address assigned to the M2M device to a server to which the device management bootstrapping service address leads. This server may be a LWM2M server is described in more detail above, however for clarification, it is configured to run a bootstrapping service or function. This optional feature enables the gateway to send a notification to the server on an ad hoc basis when a new M2M device, or several M2M devices, has been sent the device management bootstrapping service address. This may be achieved by the gateway performing a PUT operation for each M2M device or for a batch of new M2M devices.

In an alternative example, sever may request an update on M2M devices that have recently received the device management bootstrapping service address. This may be achieved by the gateway compiling a list of IP addresses of M2M devices to which it has sent the device management bootstrapping service address, and upon receiving a request for this list from the server of the device management bootstrapping service address, the gateway is configured to send said list to said server.

Again, the server here may be a LWM2M server and in order to implement the LWM2M server observing which M2M devices the gateway has sent the device management bootstrapping service address, the gateway may be configured with LWM2M object comprising the list of IP address of M2M devices. An example of such an object is shown in figure 7a.

The gateway may also be configured to send the device management bootstrapping service address together with a server certificate to the M2M device. The server certificate enables the M2M device to verify the server of the device management bootstrapping service address.

The request received from the M2M device and the response sent to the M2M device as set out above, may be I accordance with the DHCPv6 protocol. Furthermore, the request for IA_PD sent to the DHCPv6 server and the response received from the DHCPv6 server as set out above, may be in accordance with the DHCPv6 protocol.

The gateway may be a capillary gateway of a capillary network comprising M2M devices.

An embodiment of an M2M device suitable for being configured with a device management bootstrapping service address will now be described. This M2M device may be the M2M device 102 or 402 described above. The M2M device is configured to send a request for an Internet Protocol version six, IPv6, address to a gateway, and receive a response from the gateway. The response comprises an IPv6 address assigned to the M2M device and a device management bootstrapping service address. The device management bootstrapping service address leads to a server, or a bootstrapping server, which comprises and runs a bootstrapping function so that the M2M can be bootstrapped upon being switched on. This enables the M2M device to be configured with a device management bootstrapping service address after manufacturing stage making it possible and easier for the M2M device to change bootstrapping server.

The request sent by the M2M device to the gateway may comprise a dynamic host configuration protocol for Internet protocol version six, DHCPv6, request message.

The M2M device may belong to a capillary network and may be configured to send the request for an IPv6 address to a capillary gateway.

The M2M device may also comprise a light weight machine to machine protocol, LWM2M, client. This enables the M2M device to communicate with the gateway and/or bootstrapping server in accordance with the LWM2M protocol.

An embodiment of A Dynamic Host Configuration Protocol for Internet Protocol Version Six, DHCPv6, Server will now be described. This DHCPv6 server may be DHCPv6 server 104 or 404 described above. The DHCPv6 server is configured to receive a request for Identity Association Prefix Delegation, IA_PD, and in response send a device management bootstrapping service address to a client so that said client can be configured with said address.

The client may be an M2M device, and the M2M device may receive the device management bootstrapping service address from a gateway which in turn has received the address from the DHCPv6 server, similar to the embodiments described above with reference to figures 1 to 7.

The DHCPv6 server distributes the device management bootstrapping service address so that M2M devices do not have to be manufactured with said address but can be configured with the address at a later stage.

An embodiment of a server comprising a bootstrapping function for an M2M device will now be described. The server may be a bootstrapping server, in particular it may be bootstrapping server 105 or a LWM2M server, such as LWM2M server 405, including a LWM2M bootstrapping server or a LWM2M Management Server. The device management bootstrapping service address leads to this server.

The server is configured to receive a notification of at least one M2M device having received a device management bootstrapping service address. The server may receive a notification from a gateway without having requested such a notification. Alternatively, the server may be configured to receive a registration request from a gateway, and register said gateway in order to receive said notification from said gateway. If the server is a LWM2M server, the server may observe a LWM2M object in the gateway, the LWM2M object comprises a list of M2M devices having received the device management bootstrapping service address.

Elements of the gateway and the M2M device may cooperate so as to form a system for configuring the M2M. In one embodiment of such a system a gateway is configured to send a request to a dynamic host configuration protocol for internet protocol version six, DHCPv6, server for identity association for prefix delegation, IA_PD. The gateway is further configured to receive a response from the DHCPv6 server comprising at least one prefix of an Internet Protocol for version 6, IPv6, address assigned to the gateway. The gateway is also configured to receive a device management bootstrapping service address from a node. The system further comprises an M2M device configured to request an IPv6 address based on the prefix and receiving the IPv6 address from the gateway together with the device management bootstrapping service address.

In one embodiment, the node is the DHCPv6 server, and the gateway is configured to receive the device management bootstrapping service address from the DHCPv6 server in response to its request for IA_PD.

Various methods performed by the gateway 103, 403, M2M device 102, 402, DHCPv6 server 104, 404, and the bootstrapping server 105, 405 will now be described.

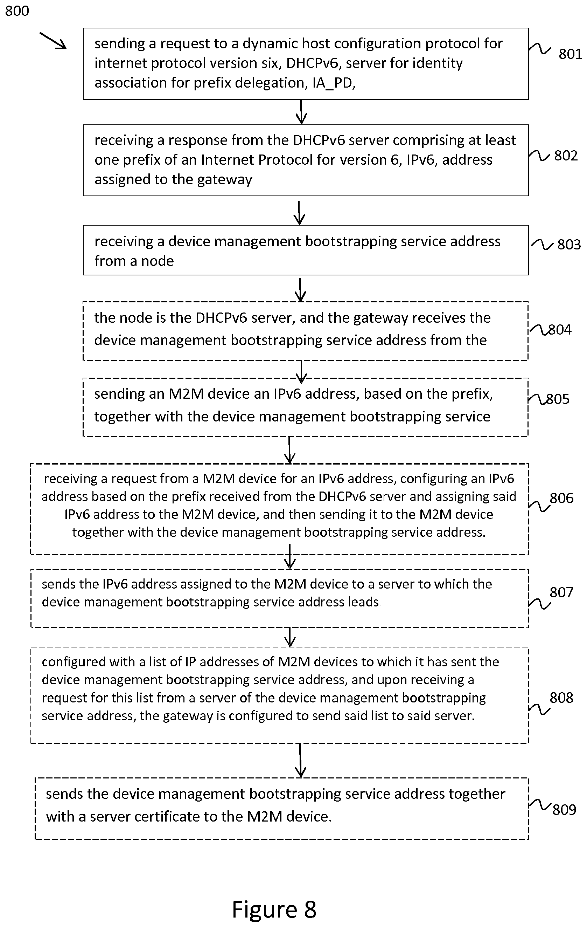

**Figure 8** illustrates a method 800 performed by a gateway. The gateway may be gateway 103 or 403 described with reference to figures 1 to 7.

The method 800 is for configuring a device management bootstrapping service address in an M2M device. The method 800 comprises the gateway sending a request to a dynamic host configuration protocol for internet protocol version six, DHCPv6, server for identity association for prefix delegation, IA_PD, step 801. In the next step, the method comprises the gateway receiving a response from the DHCPv6 server comprising at least one prefix of an Internet Protocol for version 6, IPv6, address assigned to the gateway, step 802. In step 803 the gateway receives a device management bootstrapping service address from a node.

Optional features of method 800 will now be described with reference to figure 8 and these optional features are indicated in dashed boxes.

The node may be the DHCPv6 server, and the gateway may receive the device management bootstrapping service address from the DHCPv6 server in response to its request for IA_PD, step 804. In another unillustrated embodiment, the device management bootstrapping service address is distributed to the gateway during a router advertisement (RA) process or using HomeNet protocol, or the address is distributed from another appropriate source.

In one embodiment, the gateway sends an M2M device an IPv6 address, based on the prefix, together with the device management bootstrapping service address, step 805. This may be implemented by the gateway receiving a request from an M2M device for an IPv6 address, configuring an IPv6 address based on the prefix received from the DHCPv6 server and assigning said IPv6 address to the M2M device, and then sending it to the M2M device together with the device management bootstrapping service address, step 806.

In another embodiment, the gateway sends the IPv6 address assigned to the M2M device to a server to which the device management bootstrapping service address leads, step 807. This server may be a LWM2M server is described in more detail above, however for clarification, it is configured to run a bootstrapping service or function. This optional feature enables the gateway to send notification to the server on an ad hoc basis when a new M2M device, or several M2M devices, has been sent the device management bootstrapping service address. This may be achieved by the gateway performing a PUT operation for each M2M device or for a batch of new M2M devices.

In an alternative example, server may request an update on M2M devices that have recently received the device management bootstrapping service address. This may be achieved by the gateway compiling a list of IP addresses of M2M devices to which it has sent the device management bootstrapping service address, and upon receiving a request for this list from the server of the device management bootstrapping service address, the gateway is configured to send said list to said server, step 808.

Again, the server here may be a LWM2M server and in order to implement the LWM2M server observing which M2M devices the gateway has sent the device management bootstrapping service address, the gateway may be configured with LWM2M object comprising the list of IP address of M2M devices. An example of such an object is shown in figure 7a.

In one embodiment, the gateway sends the device management bootstrapping service address together with a server certificate to the M2M device, step 809. This is so that the M2M device can verify the server.

The request received from the M2M device and the response sent to the M2M device may be according to the DHCPv6 protocol. The request for IA_PD sent to the DHCPv6 server and the response received from the DHCPv6 server may be according to the DHCPv6 protocol. Furthermore, the gateway performing method 800 may be a capillary gateway of a capillary network comprising M2M devices.

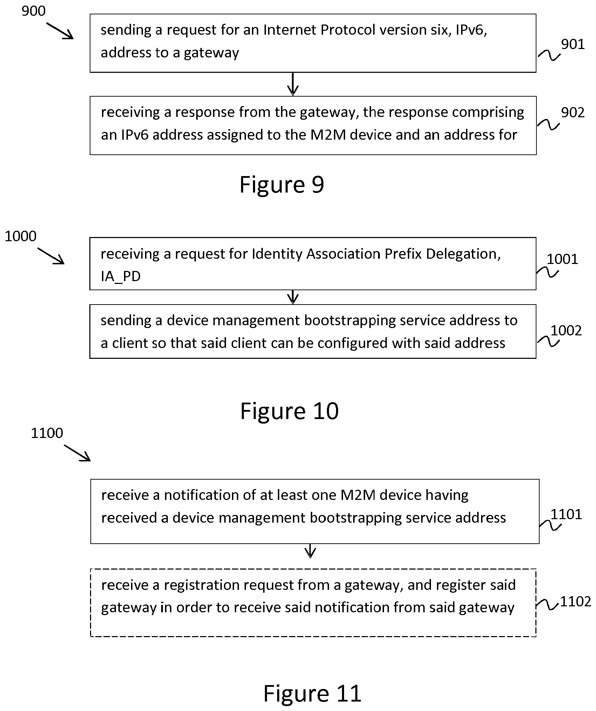

**Figure 9** illustrates a method 900 performed by an M2M, device suitable for being configured with a device management bootstrapping service address. The method may be executed by M2M device 102 or 402. The method comprises the M2M device sending a request for an Internet Protocol version six, IPv6, address to a gateway, step 901, and the M2M device receiving a response from the gateway, the response comprising an IPv6 address assigned to the M2M device and an address for the device management bootstrapping service, step 902.

Some alternatives of the method will now be described. The request may comprise a dynamic host configuration protocol for Internet protocol version six, DHCPv6, request message. The M2M device may belong to a capillary network and the method may comprise sending the request for an IPv6 address to a capillary gateway. The M2M device may comprise a light weight machine to machine protocol, LWM2M, client.

**Figure 10** illustrates a method 1000 performed by a DHCPv6 Server. The method comprises the DHCPv6 server receiving a request for Identity Association Prefix Delegation, IA_PD, and in response sending a device management bootstrapping service address to a client so that said client can be configured with said address.

The client may be an M2M device, and the M2M device may receive the device management bootstrapping service address from a gateway which in turn has received the address from the DHCPv6 server, similar to the embodiments described above with reference to figures 1 to 7.

**Figure 11** illustrates a method performed by a server comprising a bootstrapping function for an M2M device. The server may be a bootstrapping server, in particular it may be bootstrapping server 105 or a LWM2M server, such as LWM2M server 405, including a LWM2M bootstrapping server or a LWM2M Management Server. The device management bootstrapping service address is an address for this server.

The method performed by the server comprises receiving a notification of at least one M2M device having received a device management bootstrapping service address, step 1101. The server may receive a notification from a gateway without having requested such a notification. Alternatively, the server may be configured to receive a registration request from a gateway, and register said gateway in order to receive said notification from said gateway, step 1102. If the server is a LWM2M server, the server may observe a LWM2M object in the gateway, the LWM2M object comprises a list of M2M devices having received the device management bootstrapping service address.

The above described methods 800, 900, 1000 and 1100 may be performed by elements cooperating to form a system for configuring an M2M device. Such a system is illustrated in figure 1 and 4 and a method performed by such system comprises a gateway sending a request to a dynamic host configuration protocol for internet protocol version six, DHCPv6, server for identity association for prefix delegation, IA_PD. The method further comprises the gateway receiving a response from the DHCPv6 server comprising at least one prefix of an Internet Protocol for version 6, IPv6, address assigned to the gateway. The method also comprises the gateway receiving a device management bootstrapping service address from a node. Additionally, the method comprises an M2M device requesting an IPv6 address based on the prefix and receiving the IPv6 address from the gateway together with the device management bootstrapping service address.

The node is the DHCPv6 server, and the method further comprises the gateway receiving the device management bootstrapping service address from the DHCPv6 server in response to its request for IA_PD.

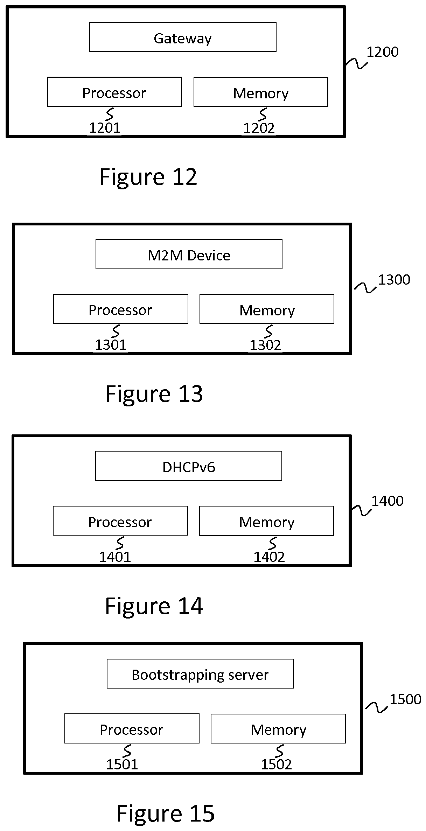

The methods of the present invention, as illustrated by the above examples, may be conducted on receipt of suitable computer readable instructions, which may be embodied within a computer program running on the gateway, M2M device, DHCPv6 server or bootstrapping server. Figures 12, 13, 14 and 15 illustrate examples of the gateway, M2M device, DHCPv6 server and bootstrapping server performing methods 800, 900, 1000 and 1100, respectively, for example on receipt of suitable instructions from a computer program. Referring to figures 12, 13, 14 and 15 each of the gateway 1200, M2M device 1300, DHCPv6 server 1400 and bootstrapping server 1500 comprises a processor 1201, 1301, 1401, 1501 and memory 1202, 1302, 1402, 1502. The memory 1202, 1302, 1402, 1502 contains instructions executable by the processor 1201, 1301, 1401, 1501 such that the gateway 1200 is operative to carry out method 800, M2M device 1300 is operative to carry out method 900, DHCPv6 server 1400 is operative to carry out method 1000 and bootstrapping server 1500 is operative to carry out the method 1100.

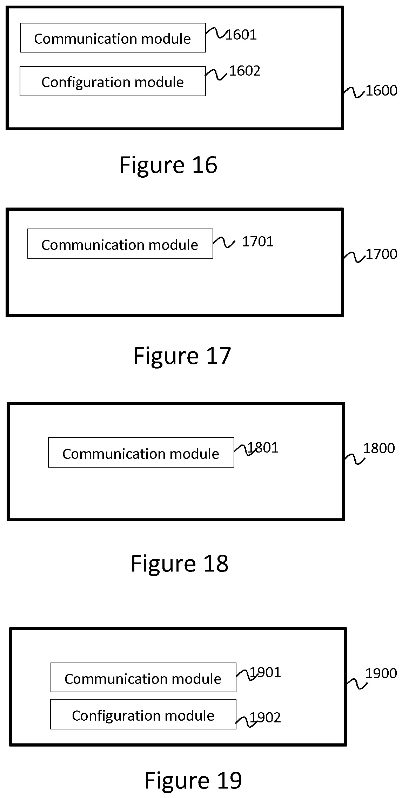

**Figure 16** illustrates functional units in another embodiment of a gateway 1600 which may execute method 800, for example according to computer readable instructions received from a computer program. It will be understood that the units illustrated in figure 16 are software implemented functional units, and may be realized in any appropriate combination of software modules. The software modules may be executed by a processor.

Referring to figure 16, the gateway 1600 comprises a communication module 1601 for sending a request to a dynamic host configuration protocol for internet protocol version six, DHCPv6, server for identity association for prefix delegation, IA_PD. The communication module 1601 also comprises means for receiving a response from the DHCPv6 server comprising at least one prefix of an Internet Protocol for version 6, IPv6, address assigned to the gateway. The communication module 1601 comprises further means for receiving a device management bootstrapping service address from a node.

In one embodiment, the node is the DHCPv6 server, and the communication module 1601 comprises means for receiving the device management bootstrapping service address from the DHCPv6 server in response to its request for IA_PD.

In one embodiment, the communication module 1601 comprises means for sending an M2M device an IPv6 address, based on the prefix, together with the device management bootstrapping service address. This may be implemented by the communication module 1601 receiving a request from an M2M device for an IPv6 address and the gateway further comprising a configuration module 1602 for configuring an IPv6 address based on the prefix received from the DHCPv6 server and assigning said IPv6 address to the M2M device, and the communication module further comprising means for sending it to the M2M device together with the device management bootstrapping service address.

The communication module 1601 may further comprise means for sending the IPv6 address assigned to the M2M device to a server to which the device management bootstrapping service address leads.

In one embodiment, the configuration module 1602 comprises means for storing a list of IP addresses of M2M devices to which it has sent the device management bootstrapping service address, and the communication module 1601 comprising means for receiving a request for this list from a server of the device management bootstrapping service address, and sending said list to said server.

In another embodiment, the configuration module 1602 comprises means for being configured with a light weight machine to machine, LWM2M, protocol object comprising the list of IP address of M2M devices to which it has sent the device management bootstrapping service address.

The communication module 1601 may further comprise means for sending the device management bootstrapping service address together with a server certificate to the M2M device.

The request received from the M2M device and the response sent to the M2M device may be according to the DHCPv6 protocol. The request for IA_PD sent to the DHCPv6 server and the response received from the DHCPv6 server may be according to the DHCPv6 protocol.

The gateway 1600 may be a capillary gateway of a capillary network comprising M2M devices.

**Figure 17** illustrates functional units of an embodiment of an M2M device 1700 which may execute method 900, for example according to computer readable instructions received from a computer program. It will be understood that the units illustrated in figure 17 are software implemented functional units, and may be realized in any appropriate combination of software modules. The software modules may be executed by a processor.

Referring to figure 17, the M2M device 1700 comprises a communication module 1701 for sending a request for an Internet Protocol version six, IPv6, address to a gateway, and for receiving a response from the gateway, the response comprising an IPv6 address assigned to the M2M device and an address for the device management bootstrapping service.

The request may comprise a dynamic host configuration protocol for Internet protocol version six, DHCPv6, request message. The M2M device may belong to a capillary network and is configured to send the request for an IPv6 address to a capillary gateway. The M2M device may comprise a light weight machine to machine protocol, LWM2M, client. The client may be an M2M device, and the M2M device may receive the device management bootstrapping service address from a gateway which in turn has received the address from the DHCPv6 server, similar to the embodiments described above with reference to figures 1 to 7.

**Figure 18** illustrates functional units in another embodiment of a DHCPv6 server 1800 which may execute method 1000, for example according to computer readable instructions received from a computer program. It will be understood that the units illustrated in figure 18 are software implemented functional units, and may be realized in any appropriate combination of software modules. The software modules may be executed by a processor.

Referring now to figure 18, the DHCPv6 server comprises a communication module 1801 for receiving a request for Identity Association Prefix Delegation, IA_PD, and in response sending a device management bootstrapping service address to a client so that said client can be configured with said address.

**Figure 19** illustrates functional units in another embodiment of a bootstrapping server 1900 which may execute method 1100, for example according to computer readable instructions received from a computer program. It will be understood that the units illustrated in figure 19 are software implemented functional units, and may be realized in any appropriate combination of software modules. The software modules may be executed by a processor.

Referring now to figure 19, the bootstrapping server 1900 comprises a communication module 1901 for receiving a notification of at least one M2M device having received a device management bootstrapping service address.

The communication module may further comprise means for receiving a registration request from a gateway. The bootstrapping server may further comprise a configuration module 1902 for registering said gateway in order to receive said notification from said gateway.

Aspects of the present invention thus provide, methods, apparatus, computer programs and a system for configuring an M2M device, in particular with a device management bootstrapping service address. Aspects of the invention provide the advantages that an M2M device does not have to be configured at manufacturing stage with a device management bootstrapping service address as this address can be changed at a later stage. Thus, as this address can easily be changed, M2M devices can easily be reconfigured to bootstrap to another server in case the previous server was misbehaving or malfunctioning.

The methods of the present invention may be implemented in hardware, or as software modules running on one or more processors. The methods may also be carried out according to the instructions of a computer program, and the present invention also provides a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A gateway for configuring a device management bootstrapping service address in a machine-to-machine, M2M, device, the gateway being configured to;
send a request to a dynamic host configuration protocol for internet protocol version six, DHCPv6, server for identity association for prefix delegation, IA_PD, and
receive a response from the DHCPv6 server comprising at least one prefix of an Internet Protocol for version 6, IPv6, address assigned to the gateway, and
the gateway being further configured to receive from a node, a device management bootstrapping service address , wherein the node is the DHCPv6 server, and the gateway is configured to receive the device management bootstrapping service address from the DHCPv6 server in response to its request for IA_PD, wherein the gateway is further configured to send to the M2M device an IPv6 address, based on the prefix, together with the device management bootstrapping service address, and wherein the gateway is configured to receive a request from an M2M device for an IPv6 address, to configure an IPv6 address based on the prefix received from the DHCPv6 server and assign said IPv6 address to the M2M device, and then send it to the M2M device together with the device management bootstrapping service address.

2. A gateway according to claim 1, wherein the gateway is further configured to send the IPv6 address assigned to the M2M device to a server to which the device management bootstrapping service address leads.

3. A gateway according to claim 1, wherein the gateway is configured with a list of IP addresses of M2M devices to which it has sent the device management bootstrapping service address, and upon receiving a request for this list from a server of the device management bootstrapping service address, the gateway is configured to send said list to said server.

4. A gateway according to claim 3, wherein the gateway is configured with a light weight machine to machine, LWM2M, protocol object comprising the list of IP address of M2M devices to which it has sent the device management bootstrapping service address.

5. A gateway according to any of claims 1 to 4, wherein the gateway is configured to send the device management bootstrapping service address together with a server certificate to the M2M device.

6. A gateway according to any of claims 1 to 5, wherein the request received from the M2M device and the response sent to the M2M device are according to the DHCPv6 protocol.

7. A gateway according to any preceding claim, wherein the request for IA_PD sent to the DHCPv6 server and the response received from the DHCPv6 server are according to the DHCPv6 protocol.

8. A gateway according to any preceding claim, wherein the gateway is a gateway of a capillary network comprising M2M devices wherein the capillary network is a local network relying on short-range radio technology for communication between the M2M devices.

9. A machine-to-machine, M2M, device suitable for being configured with a device management bootstrapping service address, the M2M device being configured to;
send a request for an Internet Protocol version six, IPv6, address to a gateway,
receive a response from the gateway, the response comprising an IPv6 address assigned to the M2M device and a device management bootstrapping service address together with a server certificate, and
based on the server certificate, verify a bootstrapping server to which the device management bootstrapping service address leads.

10. An M2M device according to claim 9, wherein the request comprises a dynamic host configuration protocol for Internet protocol version six, DHCPv6, request message.

11. An M2M device according to any of claims 9 and 10, wherein the M2M device belongs to a capillary network, wherein the capillary network is a local network relying on short-range radio technology for communication between M2M devices, and wherein the gateway is a gateway of the capillary network.

12. An M2M device according to any of claims 9 to 11, wherein the M2M device comprises a light weight machine to machine protocol, LWM2M, client.

13. A Dynamic Host Configuration Protocol for Internet Protocol Version Six, DHCPv6, Server configured to:
receive a request for Identity Association Prefix Delegation, IA_PD, from a gateway;
and in response to the request, send to the gateway at least one prefix of an Internet Protocol for version 6, IPv6, address assigned to the gateway together with a device management bootstrapping service address so that a Machine to Machine, M2M device can be configured with said management bootstrapping service address.

14. A system for configuring a machine-to-machine, M2M, device, the system comprising;
a gateway configured to send a request to a dynamic host configuration protocol for internet protocol version six, DHCPv6, server for identity association for prefix delegation, IA_PD, and
the gateway further being configured to receive a response from the DHCPv6 server comprising at least one prefix of an Internet Protocol for version 6, IPv6, address assigned to the gateway,
the gateway further being configured to receive from a node, a device management bootstrapping service address, and
an M2M device configured to request an IPv6 address and receiving the IPv6 address from the gateway, based on the prefix, together with the device management bootstrapping service address, wherein the node is the DHCPv6 server, and the gateway is configured to receive the device management bootstrapping service address from the DHCPv6 server in response to its request for IA_PD.

15. A method performed by a gateway for configuring a device management bootstrapping service address in a machine-to-machine, M2M, device, the method comprising;
receiving a request from the M2M device for an Internet Protocol for version 6, IPv6, address, to configure an IPv6 address based on a prefix received from a DHCPv6 server and assign said IPv6 address to the M2M device,
sending a request to the dynamic host configuration protocol for internet protocol version six, DHCPv6, server for identity association for prefix delegation, IA_PD,
receiving a response from the DHCPv6 server comprising at least one prefix of an IPv6 address assigned to the gateway, and
receiving from a node, a device management bootstrapping service address, wherein the node is the DHCPv6 server, and the gateway receives the device management bootstrapping service address from the DHCPv6 server in response to its request for IA_PD, and further sending to the M2M device the IPv6 address, based on the prefix, together with the device management bootstrapping service address.

16. A method performed by a machine-to-machine, M2M, device suitable for being configured with a device management bootstrapping service address, the method comprising;
sending a request for an Internet Protocol version six, IPv6, address to a gateway,
receiving a response from the gateway, the response comprising an IPv6 address assigned to the M2M device and an address for the device management bootstrapping service together with a server certificate, and
based on the server certificate, verifying a bootstrapping server to which the device management bootstrapping service address leads.

17. A method performed by Dynamic Host Configuration Protocol for Internet Protocol Version Six, DHCPv6, Server, the method comprising:
the DHCPv6 server receiving a request for Identity Association Prefix Delegation, IA_PD, from a gateway;
in response to the request, sending to the gateway at least one prefix of an Internet Protocol for version 6, IPv6, address assigned to the gateway together with a device management bootstrapping service address so that a Machine to Machine, M2M device can be configured with said management bootstrapping service address.

## Patentansprüche

1. Gateway zum Konfigurieren einer Geräteverwaltungs-Bootstrapping-Dienstadresse in einem Maschine-zu-Maschine-,M2M-,Gerät, wobei das Gateway konfiguriert ist zum:
Senden einer Anforderung für Identitätsassoziierung für Präfixdelegierung, IA_PD, an einen das Dynamic Host Configuration Protocol für Internetprotokoll Version 6, DHCPv6, unterstützenden Server, und
Empfangen einer Antwort vom DHCPv6-Server, die mindestens ein Präfix einer dem Gateway zugeordneten Adresse des Internetprotokolls für Version 6, IPv6, umfasst, und
wobei das Gateway ferner zum Empfangen einer Geräteverwaltungs-Bootstrapping-Dienstadresse von einem Knoten konfiguriert ist, wobei der Knoten der DHCPv6-Server ist, und das Gateway zum Empfangen der Geräteverwaltungs-Bootstrapping-Dienstadresse vom DHCP-v6-Server in Reaktion auf seine Anforderung für IA_PD konfiguriert ist, wobei das Gateway ferner zum Senden einer IPv6-Adresse basierend auf dem Präfix zusammen mit der Geräteverwaltungs-Bootstrapping-Dienstadresse an das M2M-Gerät konfiguriert ist, und
wobei das Gateway zum Empfangen einer Anforderung von einem M2M-Gerät für eine IPv6-Adresse, Konfigurieren einer IPv6-Adresse basierend auf dem vom DCHPv6-Server empfangenen Präfix und Zuordnen der IPv6-Adresse zum M2M-Gerät und anschließenden Senden desselben zusammen mit der Geräteverwaltungs-Bootstrapping-Dienstadresse an das M2M-Gerät konfiguriert ist.

2. Gateway nach Anspruch 1, wobei das Gateway ferner zum Senden der dem M2M-Gerät zugeordneten IPv6-Adresse an einen Server konfiguriert ist, zu welchem die Geräteverwaltungs-Bootstrapping-Dienstadresse führt.

3. Verfahren nach Anspruch 1, wobei das Gateway mit einer Liste von IP-Adressen von M2M-Geräten konfiguriert ist, an welche es die Geräteverwaltungs-Bootstrapping-Dienstadresse gesendet hat, und das Gateway so konfiguriert ist, dass es bei Empfang einer Anforderung für diese Liste von einem Server der Geräteverwaltungs-Bootstrapping-Dienstadresse die Liste an den Server sendet.

4. Gateway nach Anspruch 3, wobei das Gateway mit einem Lightweight-Machine-to-Machine-,LWM2M-,Protokollobjekt konfiguriert ist, das die Liste von IP-Adressen von M2M-Geräten umfasst, an welche es die Geräteverwaltungs-Bootstrapping-Dienstadresse gesendet hat.

5. Gateway nach einem der Ansprüche 1 bis 4, wobei das Gateway zum Senden der Geräteverwaltungs-Bootstrapping-Dienstadresse zusammen mit einem Serverzertifikat an das M2M-Gerät konfiguriert ist.

6. Gateway nach einem der Ansprüche 1 bis 5, wobei die vom M2M-Gerät empfangene Anforderung und die an das M2M-Gerät gesendete Antwort dem DHCPv6-Protokoll entsprechen.

7. Gateway nach einem der vorhergehenden Ansprüche, wobei die an den DHCPv6-Server gesendete Anforderung für IA PD und die vom DHCPv6-Server empfangene Antwort dem DHCPv6-Protokoll entsprechen.

8. Gateway nach einem der vorhergehenden Ansprüche, wobei das Gateway ein Gateway eines Kapillarnetzwerks ist, das M2M-Geräte umfasst, wobei das Kapillarnetzwerk ein lokales Netzwerk ist, das auf einer Nahbereichsfunktechnologie zur Kommunikation zwischen den M2M-Geräten beruht.

9. Maschine-zu-Maschine-,M2M-,Gerät, das geeignet ist, um mit einer Geräteverwaltungs-Bootstrapping-Dienstadresse konfiguriert zu werden, wobei das M2M-Gerät konfiguriert ist zum:
Senden einer Anforderung für eine Adresse des Internetprotokolls Version sechs, IPv6, an ein Gateway,
Empfangen einer Antwort vom Gateway, wobei die Antwort eine dem M2M-Gerät zugeordnete IPv6-Adresse und eine Geräteverwaltungs-Bootstrapping-Dienstadresse zusammen mit einem Serverzertifikat umfasst, und
Verifizieren eines Bootstrapping-Servers, zu welchem die Geräteverwaltungs-Bootstrapping-Dienstadresse führt, basierend auf dem Serverzertifikat.

10. M2M-Gerät nach Anspruch 9, wobei die Anforderung eine Anforderungsnachricht gemäß dem Dynamic Host Configuration Protocol für Internetprotokoll Version sechs, DHCPv6, umfasst.

11. M2M-Gerät nach einem der Ansprüche 9 und 10, wobei das M2M-Gerät zu einem Kapillarnetzwerk gehört, wobei das Kapillarnetzwerk ein lokales Netzwerk, ist das auf einer Nahbereichsfunktechnologie zur Kommunikation zwischen M2M-Geräten beruht, und wobei das Gateway ein Gateway des Kapillarnetzwerks ist.

12. M2M-Gerät nach einem der Ansprüche 9 bis 11, wobei das M2M-Gerät einen Lightweight-Machine-to-Machine-,LWM2M-,Protokoll-Client umfasst.

13. Server, der das Dynamic Host Configuration Protocol für Internetprotokoll Version Sechs, DHCPv6, unterstützt und konfiguriert ist zum:
Empfangen einer Anforderung für Identitätsassoziierungs-Präfixdelegierung, IA_PD, von einem Gateway; und
Senden mindestens eines Präfixes einer dem Gateway zugeordneten Adresse des Internetprotokolls Version 6, IPv6, zusammen mit einer Geräteverwaltungs-Bootstrapping-Dienstadresse in Reaktion auf die Anforderung an das Gateway, damit ein Maschine-zu-Maschine-,M2M-Gerät mit der Geräteverwaltungs-Bootstrapping-Dienstadresse konfiguriert werden kann.

14. System zum Konfigurieren eines Maschine-zu-Maschine-,M2M-,Geräts, umfassend:
ein Gateway, das zum Senden einer Anforderung für Identitätsassoziierung für Präfixdelegierung, IA PD, an einen das Dynamic Host Configuration Protocol für Internet Protokoll Version 6, DHCPv6, unterstützenden Server konfiguriert ist, und
wobei das Gateway ferner zum Empfangen einer Antwort vom DHCPv6-Server konfiguriert ist, die mindestens ein Präfix einer dem Gateway zugeordneten Adresse des Internetprotokolls für Version 6, IPv6, umfasst,
wobei das Gateway ferner zum Empfangen einer Geräteverwaltungs-Bootstrapping-Dienstadresse von einem Knoten konfiguriert ist,
ein M2M-Gerät, das zum Anfordern einer IPv6-Adresse und Empfangen der IPv6-Adresse vom Gateway basierend auf dem Präfix zusammen mit der Geräteverwaltungs-Bootstrapping-Dienstadresse konfiguriert ist, wobei der Knoten der DHCPv6-Serber ist, und das Gateway zum Empfangen der Geräteverwaltungs-Bootstrapping-Dienstadresse vom DHCPv6-Server in Reaktion auf seine Anforderung für IA_PD konfiguriert ist.

15. Verfahren, das von einem Gateway durchgeführt wird, zum Konfigurieren einer Geräteverwaltungs-Bootstrapping-Dienstadresse in einem Maschine-zu-Maschine-,M2M-,Gerät, wobei das Verfahren umfasst:
Empfangen einer Anforderung vom M2M-Gerät für eine Adresse des Internetprotokolls Version 6, IPv6, um eine IPv6-Adresse basierend auf einem Präfix zu konfigurieren, das von einem DHCPv6-Server empfangen wird, und die IPv6-Adresse dem M2M-Gerät zuzuordnen,
Senden einer Anforderung für Identitätsassoziierung für Präfixdelegierung, IA_PD, an den das Dynamic Host Configuration Protocol für Internetprotokoll Version 6, DHCPv6, unterstützenden Server,
Empfangen einer Antwort vom DHCPv6-Server, die mindestens ein Präfix einer dem Gateway zugeordneten IPv6-Adresse umfasst, und
Empfangen einer Geräteverwaltungs-Bootstrapping-Dienstadresse von einem Knoten, wobei der Knoten der DHCPv6-Server ist, und wobei das Gateway die Geräteverwaltungs-Bootstrapping-Dienstadresse vom DHCPv6-Server in Reaktion auf seine Anforderung für IA PD empfängt, und ferner Senden der IPv6-Adresse basierend auf dem Präfix zusammen mit der Geräteverwaltungs-Bootstrapping-Dienstadresse an das M2M-Gerät.

16. Verfahren, das von einem Maschine-zu-Maschine-,M2M-,Gerät, durchgeführt wird, das geeignet ist, um mit einer Geräteverwaltungs-Bootstrapping-Dienstadresse konfiguriert zu werden, wobei das Verfahren umfasst:
Senden einer Anforderung für eine Adresse des Internetprotokolls Version 6, IPv6, an ein Gateway,
Empfangen einer Antwort vom Gateway, wobei die Antwort eine dem M2M-Gerät zugeordnete IPv6-Adresse und eine Adresse für den Geräteverwaltungs-Bootstrapping-Dienst zusammen mit einem Serverzertifikat umfasst, und
Verifizieren eines Bootstrapping-Servers, zu welchem die Geräteverwaltungs-Bootstrapping-Dienstadresse führt, basierend auf dem Serverzertifikat.

17. Verfahren, das von einem das Dynamic Host Configuration Protocol für Internetprotokoll Version Sechs, DHCPv6, unterstützenden Server durchgeführt wird, wobei das Verfahren umfasst:
Empfangen einer Anforderung für Identitätsassoziierungs-Präfixdelegierung, IA_PD, durch den DHCPv6-Server von einem Gateway;
Senden in Reaktion auf die Anforderung mindestens eines Präfixes einer dem Gateway zugeordneten Adresse des Internetprotokolls Version 6, IPv6, zusammen mit einer Geräteverwaltungs-Bootstrapping-Dienstadresse an das Gateway, damit ein Maschine-zu-Maschine-,M2M-Gerät mit der Geräteverwaltungs-Bootstrapping-Dienstadresse konfiguriert werden kann.

## Revendications

1. Passerelle pour configurer une adresse de service d'amorçage de gestion de dispositif dans un dispositif de machine à machine, M2M, la passerelle étant configurée pour :
envoyer une demande à un serveur de protocole de configuration d'hôte dynamique pour protocole Internet version 6, DHCPv6, pour une association d'identité pour délégation de préfixe, IA_PD, et
recevoir une réponse depuis le serveur DHCPv6 comprenant au moins un préfixe d'une adresse de protocole Internet version 6, IPv6, assignée à la passerelle, et
la passerelle étant en outre configurée pour recevoir, depuis un nœud, une adresse de service d'amorçage de gestion de dispositif, dans laquelle le nœud est le serveur DHCPv6, et la passerelle est configurée pour recevoir l'adresse de service d'amorçage de gestion de dispositif depuis le serveur DHCPv6 en réponse à sa demande pour IA_PD, dans laquelle la passerelle est en outre configurée pour envoyer, au dispositif M2M, une adresse IPv6, sur la base du préfixe, avec l'adresse de service d'amorçage de gestion de dispositif, et dans laquelle la passerelle est configurée pour recevoir une demande depuis un dispositif M2M pour une adresse IPv6, pour configurer une adresse IPv6 sur la base du préfixe reçu depuis le serveur DHCPv6 et assigner ladite adresse IPv6 au serveur M2M, puis l'envoyer au dispositif M2M avec l'adresse de service d'amorçage de gestion de dispositif.

2. Passerelle selon la revendication 1, dans laquelle la passerelle est en outre configurée pour envoyer l'adresse IPV6 assignée au dispositif M2M à un serveur auquel mène l'adresse de service d'amorçage de gestion de dispositif.

3. Passerelle selon la revendication 1, dans laquelle la passerelle est configurée avec une liste d'adresses IP de dispositifs M2M auxquels elle a envoyé l'adresse de service d'amorçage de gestion de dispositif, et, à la réception d'une demande pour cette liste depuis un serveur de l'adresse de service d'amorçage de gestion de dispositif, la passerelle est configurée pour envoyer ladite liste audit serveur.

4. Passerelle selon la revendication 3, dans laquelle la passerelle est configurée avec un objet de protocole de machine à machine de poids léger, LWM2M, comprenant la liste d'adresses IP de dispositifs M2M auxquels elle a envoyé l'adresse de service d'amorçage de gestion de dispositif.

5. Passerelle selon l'une quelconque des revendications 1 à 4, dans laquelle la passerelle est configurée pour envoyer l'adresse de service d'amorçage de gestion de dispositif avec un certificat de serveur au dispositif M2M.

6. Passerelle selon l'une quelconque des revendications 1 à 5, dans laquelle la demande reçue depuis le dispositif M2M et la réponse envoyée au dispositif M2M sont conformes au protocole DHCPv6.

7. Passerelle selon l'une quelconque des revendications précédentes, dans laquelle la demande pour IA PD envoyée au serveur DHCPv6 et la réponse reçue depuis le serveur DHCPv6 sont conformes au protocole DHCPv6.

8. Passerelle selon l'une quelconque des revendications précédentes, dans laquelle la passerelle est une passerelle d'un réseau capillaire comprenant des dispositifs M2M, dans laquelle le réseau capillaire est un réseau local s'appuyant sur une technologie radio de courte portée pour une communication entre les dispositifs M2M.

9. Dispositif de machine à machine, M2M, apte à être configuré avec une adresse de service d'amorçage de gestion de dispositif, le dispositif M2M étant configuré pour :
envoyer une demande pour une adresse de protocole Internet version six, IPv6, à une passerelle,
recevoir une réponse depuis la passerelle, la réponse comprenant une adresse IPv6 assignée au dispositif M2M et une adresse de service d'amorçage de gestion de dispositif avec un certificat de serveur, et
sur la base du certificat de serveur, vérifier un serveur d'amorçage auquel mène l'adresse de service d'amorçage de gestion de dispositif.

10. Dispositif M2M selon la revendication 9, dans lequel la demande comprend un message de demande de protocole de configuration d'hôte dynamique pour protocole Internet version six, DHCPv6.

11. Dispositif M2M selon l'une quelconque des revendications 9 et 10, dans lequel le dispositif M2M appartient à un réseau capillaire, dans lequel le réseau capillaire est un réseau local s'appuyant sur une technologie radio de courte portée pour une communication entre les dispositifs M2M, et dans lequel la passerelle est une passerelle du réseau capillaire.

12. Dispositif M2M selon l'une quelconque des revendications 9 à 11, dans lequel le dispositif M2M comprend un client de protocole de machine à machine de poids léger, LWM2M.

13. Serveur de protocole de configuration d'hôte dynamique pour protocole Internet version six, DHCPv6, configuré pour :
recevoir une demande pour une association d'identité pour délégation de préfixe, IA_PD, depuis une passerelle ;
et en réponse à la demande, envoyer, à la passerelle, au moins un préfixe d'une adresse de protocole Internet version 6, IPv6, assignée à la passerelle avec une adresse de service d'amorçage de gestion de dispositif, de sorte qu'un dispositif de machine à machine, M2M, puisse être configuré avec ladite adresse de service d'amorçage de gestion.

14. Système pour configurer un dispositif de machine à machine, M2M, le système comprenant :
une passerelle configurée pour envoyer une demande à un serveur de protocole de configuration d'hôte dynamique pour protocole Internet version six, DHCPv6, pour une association d'identité pour délégation de préfixe, IA_PD, et
la passerelle étant en outre configurée pour recevoir une réponse depuis le serveur DHCPv6 comprenant au moins un préfixe d'une adresse de protocole Internet version 6, IPv6, assignée à la passerelle,
la passerelle étant en outre configurée pour recevoir, depuis un nœud, une adresse de service d'amorçage de gestion de dispositif, et
un dispositif M2M configuré pour demander une adresse IPv6 et recevoir l'adresse IPv6 depuis la passerelle, sur la base du préfixe, avec l'adresse de service d'amorçage de gestion de dispositif, dans lequel le nœud est le serveur DHCPv6 et la passerelle est configurée pour recevoir l'adresse de service d'amorçage de gestion de dispositif depuis le serveur DHCPv6 en réponse à sa demande pour IA PD.

15. Procédé réalisé par une passerelle pour configurer une adresse de service d'amorçage de gestion de dispositif dans un dispositif de machine à machine, M2M, le procédé comprenant :
la réception d'une demande depuis le dispositif M2M pour une adresse de protocole Internet version 6, IPv6, pour configurer une adresse IPv6 sur la base d'un préfixe reçu depuis un serveur DHCPv6 et assigner ladite adresse IPv6 au dispositif M2M,
l'envoi d'une demande au serveur de protocole de configuration d'hôte dynamique pour protocole Internet version six, DHCPv6, pour une association d'identité pour délégation de préfixe, IA_PD,
la réception d'une réponse depuis le serveur DHCPv6 comprenant au moins un préfixe d'une adresse IPv6 assignée à la passerelle, et
la réception, depuis un nœud, d'une adresse de service d'amorçage de gestion de dispositif, dans lequel le nœud est le serveur DHCPv6, et la passerelle reçoit l'adresse de service d'amorçage de gestion de dispositif depuis le serveur DHCPv6 en réponse à sa demande pour IA PD, et en outre l'envoi, au dispositif M2M, de l'adresse IPv6, sur la base du préfixe, avec l'adresse de service d'amorçage de gestion de dispositif.

16. Procédé réalisé par un dispositif de machine à machine, M2M, apte à être configuré avec une adresse de service d'amorçage de gestion de dispositif, le procédé comprenant :
l'envoi d'une demande pour une adresse de protocole Internet version six, IPv6, à une passerelle,
la réception d'une réponse depuis la passerelle, la réponse comprenant une adresse IPv6 assignée au dispositif M2M et une adresse de service d'amorçage de gestion de dispositif avec un certificat de serveur, et sur la base du certificat de serveur, la vérification d'un serveur d'amorçage auquel mène l'adresse de service d'amorçage de gestion de dispositif.

17. Procédé réalisé par un serveur de protocole de configuration d'hôte dynamique pour protocole Internet version six, DHCPv6, le procédé comprenant :
la réception, par le serveur DHCPv6, d'une demande pour une association d'identité pour délégation de préfixe, IA_PD, depuis une passerelle ;
en réponse à la demande, l'envoi, à la passerelle, d'au moins un préfixe d'une adresse de protocole Internet version 6, IPv6, assignée à la passerelle avec une adresse de service d'amorçage de gestion de dispositif de sorte qu'un dispositif de machine à machine, M2M, puisse être configuré avec ladite adresse de service d'amorçage de gestion.
